# EUROPEAN PATENT APPLICATION

(11) **EP 4 818 019 A1**
(43) Date of publication of application: **07.10.2026**
(21) Application number: 26165678.9
(22) Date of filing: 18.03.2026
(51) Int. Cl.: B62K 21/22

(54) **ASSEMBLY FOR A BICYCLE STEM FOR ADJUSTING A DISTANCE BETWEEN A STEERER TUBE AND A HANDLEBAR**

(30) Priority: 19.03.2025 NL 2040002
(71) Applicant: OPEN Cycle AG, 4057 Basel (CH)
(72) Inventor: VROOMEN, Gerard Louis Jean Paul Amaury, 1011 TB AMSTERDAM (NL)
(74) Representative: EP&C

(57) **Abstract**

The present invention relates to an assembly for a bicycle handlebar, comprising a stem portion, a clamping opening in an end part of the stem portion for receiving an upper end of a steerer tube and at least one clamping member for clamping the steerer tube inside the clamping opening. The clamping member comprises an insert part that is destined to lie with a front clamping face against the steerer tube and with a rear clamping face against the clamping opening. The clamping opening is dimensioned to allow the upper end of the steerer tube and the insert part of the clamping member to fit inside it behind each other.

The upper end of the steerer tube comprises a front contour and a rear contour, located opposite to each other, wherein the front contour is of a different shape than the rear contour, such that the insert part of the clamping member is positionable in a single rotational position against the steerer tube inside the clamping opening for adjusting a distance between the steerer tube and the handlebar.

## Description

### Field of the invention

The present invention relates to an assembly for a bicycle handlebar for adjusting a distance between a steerer tube and the handlebar. The invention further relates to a bicycle comprising a steerer tube and such an assembly.

### State of the art

In EP 3 170 727 B1, an assembly of a bicycle stem and one or more clamping organs is disclosed. The known assembly comprises a stem portion with a clamping opening and at least one clamping member for clamping a steerer tube inside the clamping opening. The clamping opening has symmetric opposing end sections. Those opposing end sections as well as inner and outer clamping faces of one or more insert parts of a clamping organ are shaped complementary to outer circumferential parts of an upper end of the steerer tube, such that the at least one insert part of the clamping organ is positionable in two different rotational positions on either side of the steerer tube inside the clamping opening for adjusting a distance between the steerer tube and the handlebar.

Even though this known assembly has proven to be a useful product for adjusting a distance between the steerer tube and the handlebar whilst minimizing material usage, reducing complexity of the assembly and therefore reducing cost, the cylindrical steerer tube may inadvertently rotate inside the insert parts when not clamped as sufficiently as required.

Furthermore, it is a recent desire to route cables and fluid lines through the internals of bicycle. This would require a passage between the steerer tube and the stem and/or a bearing of the steerer tube inside the bicycle's frame. However, when combining such a passage with the length adjustment feature, a skilled person would be reluctant to provide such a passage, as the above-identified prior art teaches to have a symmetrical steerer tube, which symmetry thus teaches to provide at least two (mirror image) passages.

This may provide a further drawback, in that the contact between the steerer tube and a circular steerer tube bearing, i.e. located inside the bicycle's frame and positioned below the stem portion, is reduced. The two passages provide for increased difficulty during manufacturing, as further machining steps would be required to reach the required tolerance. Furthermore, the excessive flattening of the steerer would reduce the second moment of area and the second polar moment of area of the steerer tube, thereby reducing the stiffness of the bicycle setup.

### Object of the invention

It is therefore an object of the invention to provide an assembly for a bicycle handlebar for adjusting a distance between the steerer tube and the handlebar that is less prone to inadvertent rotation of the steerer tube, that allows for convenient internal routing of cables and fluid lines, and/or to maintain stiffness of the bicycle as much as possible, or at least to provide an alternative assembly. In particular, it is an object to provide an assembly in which the positioning of a clamping member relative to the steerer tube is geometrically constrained to a single rotational orientation.

### Detailed description

The present invention provides an assembly for a bicycle handlebar, as claimed in claim 1. The stem portion of the assembly extends in a longitudinal direction between a steerer tube of a bicycle fork, an upper end of which is aligned in the insertion direction and is provided at one end of the stem portion, and a handlebar that is provided at an opposed end of the stem portion. The handlebar may be a separate component, but may as well be integrally connected to the stem portion as an integrated handlebar cockpit, for example formed by the same carbon fibre part.

The longitudinal direction may be aligned substantially in a driving direction of the bicycle, whereby the handlebar is provided at a front end of the stem portion and the steerer tube is located at a rear end. For adjusting the distance between the steerer tube and the handlebar, the clamping opening for the steerer tube in the stem portion is wider than the diameter of the steerer tube, seen along the longitudinal direction.

For securing the position of the stem portion around the steerer tube, the clamping member is provided to fill up a remaining portion of the clamping opening inside the stem portion around the steerer tube. To this effect, the clamping member comprises one or more of the insert parts, which are to be arranged in front of and/or behind the steerer tube, when seen along the longitudinal direction.

The at least one insert part may be destined to lie with a front clamping face against the steerer tube and with a rear clamping face against the clamping opening. In this situation, the insert part is thus located behind the steerer tube.

Alternatively, or where the clamping member comprises multiple of the insert parts, the insert part may lie with a rear clamping face against the steerer tube and with a front clamping face against the clamping opening. In this situation, the insert part is thus located in front of the steerer tube, possibly in combination with another insert part behind the steerer tube.

For positioning the insert parts in the clamping opening, a front end section of the clamping opening is defined as the portion of the clamping opening located in front of the steerer tube. It is noted that the steerer tube may be located at the very front of the clamping opening, which implies that the steerer tube is located in the front end section, which means that no empty space is present for receiving an insert part in front of the steerer tube. A rear end section may be defined behind the steerer tube in a manner similar to the front end section explained above.

The clamping opening is configured to jointly receive the upper end of the steerer tube and the insert parts to substantially fill up the clamping opening so as to ensure that the position of the stem portion relative to the steerer tube can be maintained. Multiple of the insert parts may be positioned in the front end section and/or in the rear end section, in which case the insert parts are positioned behind each other along the longitudinal direction.

The insert parts may have different thicknesses, but are typically provided to, either alone or in combination, fill up the clamping opening, together with the steerer tube. Not all insert parts may necessarily be used at the same time, but may rather be stored by users for exchange in the future, in case adjustment of the distance between the steerer tube and the handlebar would then be needed.

Compared to the prior art, the present invention is characterized in that the upper end of the steerer tube comprises a front contour and a rear contour, located opposite to each other along the longitudinal direction. When in use on a bicycle, the front contour will face the front, e.g. in a driving direction, whereas the rear contour will face towards the rear. In the steerer tube used for the present assembly, the front contour is shaped different from the rear contour, e.g. meaning that the front contour is of a different shape than the rear contour. This difference in shape may provide that some of the insert parts that are able to be positioned against the front contour will not be able to be positioned against the rear contour and vice versa.

In the context of the present invention, this difference in shape is not merely a difference in dimension or extent, but relates to a structural difference in geometry between the front contour and the rear contour. In particular, the front contour and the rear contour may be configured such that they are not interchangeable by rotation of the steerer tube around its longitudinal axis, for example not by a rotation of 180°. As a consequence, a clamping member or insert part that is adapted to cooperate with one of the contours may not be positioned against the other contour in a reversed orientation while achieving a proper fit.

The asymmetric design of the steerer tube according to the invention may allow for the internal routing of cables and fluid lines in between the clamping opening and the steerer tube. For example where the steerer tube were to have a circular cross-section with a flattened front contour, a cable guiding passage is provided in between the front end section and the flattened front portion. The asymmetric design allows the passage to be only present in front of the steerer tube, whereas the symmetric prior art steerer tube would require a flattened portion to be present behind the steerer tube as well. In fact, such a symmetric steerer tube is disclosed in the figures of the above-identified prior art document.

A benefit of a single passage between the steerer tube and the clamping opening is that the contact between the steerer tube and a circular steerer tube bearing, i.e. located inside the bicycle's frame and positioned below the stem portion, can be relatively large. The passage typically runs along a large portion of the steerer tube's length and through the bearing. As a result, having only a single passage, allows the circular contact between the steerer tube and the bearing to be interrupted at one point only, instead of both in front and behind the steerer tube.

Furthermore, the larger degree of roundness of the steerer tube with a single passage allows for convenient machining to its required tolerance, for example by means of a lathe, compared to when more flattened portions or the like will be provided.

Furthermore, the present invention may inhibit that any excessive flattening of the steerer would reduce the second moment of area and the second polar moment of area of the steerer tube, thereby reducing the stiffness of the bicycle setup unless extra material is added to the steerer tube, which would then increase the weight of the bicycle.

The present invention will further ensure that the insert part of the clamping member is positionable in a single rotational position against the front and rear contours of the steerer tube inside the clamping opening for adjusting a distance between the steerer tube and the handlebar.

Due to the structural difference between the front contour and the rear contour, the insert part may be positionable relative to the steerer tube in one and the same rotational orientation. In particular, the insert part may be configured such that its front clamping face is intended to face the front contour and its rear clamping face is intended to face the rear contour, and reversing the insert part will prevent proper accommodation within the clamping opening and/or prevent sufficient clamping.

In known assemblies, for example disclosed in EP 3 170 727 B1, the steerer tube and the cooperating clamping elements are typically configured symmetrically, such that an insert part can be positioned on either side of the steerer tube in different rotational orientations. This may imply that the contours of the steerer tube are mutually compatible or substantially identical in shape.

In contrast, the present invention may deliberately depart from such symmetric configurations by providing front and rear contours that differ in shape in a manner that enforces a single rotational orientation of the insert part.

In other words, the front clamping face of the insert part will always face towards the front and the rear clamping face of the insert part will face towards the back. **In** a reverse order, the insert parts will generally not be able to fit inside the front end section and the rear end section, at least not in a manner in which sufficient clamping can be achieved.

The present invention may allow the insert parts to be positioned both in front of the steerer tube and behind the steerer tube, but requires that their orientation will stay the same. This reduces the risk of potential positioning errors by the users, since a reversal in the direction may provide that the insert part cannot be fitted in the clamping opening. Moreover, the insert parts can now be visually marked or labelled to indicate the front clamping face and the rear clamping face so as to help the user. The difference in shape between the front contour and the rear contour may thus provide a geometric constraint that defines the allowable positioning of the insert part within the clamping opening. This geometric constraint may be achieved by the complementary relationship between the clamping faces of the insert part and the respective contours of the steerer tube.

Furthermore, this asymmetry of the insert parts and the steerer tube, and optionally also of the clamping opening, may contribute to obtaining a shape-fit between the steerer tube and the stem portion, in particular to prevent inadvertent rotations of the steerer tube inside the clamping opening and inside the insert parts.

In an embodiment, the front end section is shaped different from the rear end section, e.g. meaning that the front end section is of a different shape than the rear end section. As such, the clamping opening may be asymmetric as well, which may provide for a further improved shape-fit between the steerer tube and the stem portion, as well as for even fewer possibilities for a user in which the insert parts can be inserted incorrectly.

The different shape between the front end section and the rear end section may be obtained by a different local contour of the clamping opening or by a different size, such as a different radius. For example, the front end section may be shaped at least partially flat and the rear end section may be shaped substantially convex, i.e. outwardly rounded.

Alternatively, the front end section may be shaped to at least partly correspond to the rear end section. According to this alternative, at least part of the front end section and the rear end section may correspond to each other in terms of shape and size, for example both being at least partially flat.

In an embodiment, the clamping member is of a first type, in which the front clamping face is shaped different from the rear clamping face, e.g. meaning that the front clamping face is of a different shape than the rear clamping face. This embodiment may allow a single insert part to be used both in the front end section in front of the steerer tube and in the rear end section behind the steerer tube. The difference in shape between the front clamping face and the rear clamping face may allow for a further improved shape-fit of the insert part and will further reduce the risk of a user inserting the insert part in the wrong direction.

In a further embodiment, the front clamping face is shaped at least partially complementary to the front end section of the clamping opening and to the rear contour of the steerer tube, and the rear clamping face is shaped at least partially complementary to the rear end section of the clamping opening and to the front contour of the steerer tube.

As such, the insert part can be positioned both in the front end section in front of the steerer tube, by its front clamping face mating with the front end section and its rear clamping face being complementary to the front contour of the steerer tube. The insert part can also be placed in the rear end section behind the steerer tube, whereby the front clamping face corresponds to the rear contour of the steerer tube and the rear clamping face mates with the rear end section.

In an embodiment, for example in addition to the above, the upper end of the steerer tube may have a cylindrical cross section with a flattened portion forming the front contour, whereby the rear contour of the insert parts is substantially convex, i.e. outwardly rounded and semi-circular. Likewise, the front end section may be flattened to correspond to the front contour and the rear end section of the insert parts may be at least partially concave, i.e. inwardly rounded to receive the rear contour and to be complementary therewith. Side edges on opposed sides of the concave part of the rear end section may be flattened as well.

The front clamping face of the insert part is substantially flattened in order to abut the flattened front end section and comprises a concave centre to abut the rounded rear contour of the steerer tube. The front clamping face thus comprises flat edges and a concave centre.

The rear clamping face of the insert part is substantially flat to abut the flat side edges of the rear end section and to abut the flat front contour of the steerer tube. The rear clamping face may thus be flat over its entire width and the concave part of the rear end section may remain empty as no part of the insert part will lie therein.

In an embodiment, the assembly comprises a single one of the clamping members of the first type that is dimensioned to substantially fill up one of the end sections of the clamping opening adjacent the upper end of the steerer tube in a clamping position.

According to this embodiment, the insert part is dimensioned to fit in the front end section or the rear end section by itself. This allows the stem portion to be arranged in two positions relative to the steerer tube, namely either having the single insert part in front of the steerer tube in the front end section or behind the steerer tube in the rear end section. This may allow for convenient adjustment of the handlebar with only a single insert part, reducing the risk of incorrect placement. In fact, the geometry of the front clamping face and the rear clamping face will prevent that the insert part is inserted backwards in the end section.

In an alternative embodiment, the assembly comprises a plurality of the clamping members of the first type that are dimensioned to jointly substantially fill up one of the end sections of the clamping opening adjacent the upper end of the steerer tube in a clamping position and to each substantially fill up a respective one of the end sections of the clamping opening adjacent the upper end of the steerer tube in the clamping position.

This embodiment may allow for a larger number of different positions of the steerer tube in the clamping opening. The insert parts of the first type can be positioned in front and behind the steerer tube in the clamping opening and, furthermore, the number of insert parts in the front end section and the rear end section can be varied, provided that the clamping opening will be filled substantially completely.

In an exemplary embodiment, the clamping opening may have a remaining width along the longitudinal direction of 15 mm after inserting the steerer tube therein. The multiple insert parts of the first type will thus need to fill this 15 mm, for example by having one insert part of 5 mm thickness and one insert part of 10 mm thickness. A front-most position of the stem portion relative to the steerer tube can be obtained if both insert parts are placed in the front end section in front of the steerer tube. The stem portion can be moved backwards over 5 mm by removing the 5 mm insert part out of the front end section and placing it in the rear end section. The stem portion can be moved backwards for a further 5 mm, so 10 mm in total, by placing the 5 mm insert part back into the front end section and by placing the 10 mm insert part in the rear end section. Finally, a rear-most position of the stem portion can be achieved if both insert parts are inserted in the rear end section to have a combined thickness of 15 mm.

Further insert parts can be provided having thicknesses in between 0 mm and 15 mm to allow for even finer adjustments of the stem portion relative to the steerer tube. Care must be taken that the thicknesses of those should insert parts be selected such, that combinations of the insert parts can add up to 15 mm, in order to have the end sections filled completely.

It is noted in general, however, that the present invention may envisage that not all insert parts will be inserted in the clamping opening simultaneously. Instead, a user may store unused insert parts, allowing the user to adjust the distance between the steerer tube and the handlebar at a later moment, by exchanging the insert parts.

In an embodiment, the clamping member is of a second type, e.g. different from the first type, in which the front clamping face is shaped to at least partly correspond to the rear clamping face. According to this embodiment, the front clamping face and rear clamping face may thus have a similar shape and/or size. This may for example allow two of the insert parts to be nested against each other in the front end section or rear end section, so that the individual insert parts with their own thicknesses in the longitudinal direction can effectively be combined into a combined insert part with larger thickness.

According to this embodiment, the front contour of the steerer tube may be shaped substantially complementary to the rear contour, for example having a concave front contour to define the passage for cables and fluid lines and having a corresponding convex rear contour. Accordingly, the front clamping face of the clamping member may be concave, allowing it to be positioned behind the steerer tube against the rear contour thereof, and the rear clamping face of the clamping member may be convex, allowing it to be positioned in front of the steerer tube against the front contour thereof.

In a further embodiment, the clamping member of the second type comprises a front clamping member, of which the front clamping face is shaped at least partially complementary to the front end section of the clamping opening and of which the rear clamping face is shaped at least partially complementary to the front contour of the steerer tube.

This front clamping member is specifically intended to be placed in the front end section and cannot be inserted in the rear end section. To this effect, the front clamping face of the insert part of the front clamping member, and front clamping faces in case of a front clamping member with multiple insert parts, is shaped to correspond to the front end section and the rear clamping face to correspond to the front contour of the steerer tube. Since the invention requires that the front contour and the rear contour are different, the front clamping member cannot be placed in the rear end section behind the steerer tube.

In a further or alternative embodiment, the clamping member of the second type comprises a rear clamping member, of which the front clamping face is shaped at least partially complementary to the rear contour of the steerer tube and of which the rear clamping face is shaped at least partially complementary to the rear end section of the clamping opening.

This rear clamping member is specifically intended to be placed in the rear end section and cannot be inserted in the front end section. To this effect, the rear clamping face of the insert part of the rear clamping member, and rear clamping faces in case of a rear clamping member with multiple insert parts, is shaped to correspond to the rear end section and the front clamping face to correspond to the rear contour of the steerer tube. Since the invention requires that the rear contour and the front contour are different, the rear clamping member cannot be placed in the front end section in front of the steerer tube.

In an embodiment, the assembly comprises a single one of the clamping members of the second type that is dimensioned to substantially fill up one of the end sections of the clamping opening adjacent the upper end of the steerer tube in a clamping position, e.g. a single front clamping member to substantially fill up the front end section or a single rear clamping member to substantially fill up the rear end section.

According to this embodiment, the insert part of each clamping member is dimensioned to fit in the front end section or the rear end section by itself. This allows the stem portion to be arranged in two positions relative to the steerer tube, namely either having the front clamping member in front of the steerer tube in the front end section or by having the rear clamping member behind the steerer tube in the rear end section. This may allow for convenient adjustment of the handlebar with only two clamping members, wherein each clamping member can only be used in one end section, reducing the risk of incorrect placement. In fact, the geometry of the front clamping member and the rear clamping member will prevent that the front clamping member is inserted in the rear end section and that the rear clamping member is inserted in the front end section. Only a single one of the clamping members can be placed in the clamping opening simultaneously, which means that the other one can be stored by the user to adjust the distance between the steerer tube and the handlebar at a later moment, by exchanging the clamping members.

In an alternative embodiment, the assembly comprises a plurality of the clamping members of the second type that are dimensioned to jointly substantially fill up one of the end sections of the clamping opening adjacent the upper end of the steerer tube in a clamping position, e.g. a plurality of the front clamping members to substantially fill up the front end section or a plurality of the rear clamping members to substantially fill up the rear end section.

Since the clamping members of the second type have corresponding front clamping faces and rear clamping faces, it is possible to nest two or more of the front clamping members to jointly fill the front end section and to nest two or more of the rear clamping members to jointly fill the rear end section. This may allow for a more accurate adjustment of the position of the steerer tube in the clamping opening, since the relatively large width of the front end section or rear end section can be filled by two or more clamping members of smaller thickness, e.g. provided that the other end section will be filled accordingly.

In a further alternative embodiment, the assembly comprises a plurality of the clamping members of the second type that are dimensioned to jointly substantially fill up both end sections of the clamping opening adjacent the upper end of the steerer tube in a clamping position, e.g. one or more of the front clamping members to substantially fill up the front end section and one or more of the rear clamping members to substantially fill up the rear end section.

According to this embodiment, the multiple clamping members of the second type may comprise multiple front clamping members and multiple rear clamping members that can be inserted into the end sections simultaneously, although this may not require that all of the clamping members can be placed at the same time.

For example, two front clamping members of different thickness may be provided, for example one of 5 mm and one of 10 mm. These front clamping members may comprise insert parts with flattened front clamping faces and flattened rear clamping faces, in order to abut the flattened front contour and front end section. Likewise, two rear clamping members of different thickness may be provided as well, for example also one of 5 mm and one of 10 mm. These rear clamping members may comprise insert parts with concave front clamping faces and convex rear clamping faces, in order to respectively abut the convex rear contour and concave rear end section. A front-most position of the stem portion relative to the steerer tube can thereby be obtained if both front clamping members are placed in the front end section in front of the steerer tube. The stem portion can be moved backwards over 5 mm by removing the 5 mm front clamping member out of the front end section and placing the 5 mm rear clamping member in the rear end section. The stem portion can be moved backwards for a further 5 mm, so 10 mm in total, by placing the 5 mm front clamping member back into the front end section, by removing the 10 mm front clamping member from the front end section, by removing the 5 mm rear clamping member from the rear end section and by placing the 10 mm rear clamping member in the rear end section. Finally, a rear-most position of the stem portion can be achieved when the 5 mm front clamping member is removed from the front end section and when both rear clamping members are inserted in the rear end section to have a combined thickness of 15 mm.

Further front clamping members or rear clamping members can be provided having thicknesses in between 0 mm and 15 mm to allow for even finer adjustments of the stem portion relative to the steerer tube. Care must be taken that the thicknesses of those should be selected such, that combinations of the clamping members can add up to 15 mm, in order to allow the end sections to be filled completely.

A further benefit of the clamping members of the second type, is that the front clamping members cannot be replaced by rear clamping members and vice versa, reducing the risk of incorrect insertion of the clamping members in the clamping opening.

In an embodiment, the plurality of clamping members have different thicknesses in the longitudinal direction for substantially filling up the respective end sections of the clamping opening to a larger or lesser amount adjacent the upper end of the steerer tube in the clamping position.

This embodiment may allow for a larger number of different positions of the steerer tube in the clamping opening, since the combined thickness of the clamping members can be adjusted by varying the number of clamping members used and varying the type of clamping members, i.e. by varying their individual thickness. The insert parts of the clamping members can be positioned in front and behind the steerer tube in the clamping opening and, furthermore, the number of insert parts in the front end section and the rear end section can be varied, provided that the clamping opening will be filled substantially completely.

It is noted in general, however, that the present invention may envisage that not all insert parts will be inserted in the clamping opening simultaneously. Instead, a user may store unused insert parts, allowing the user to adjust the distance between the steerer tube and the handlebar at a later moment, by exchanging the insert parts.

In an embodiment, the upper end of the steerer tube has a cylindrical cross section with a flattened portion, and one of the front or rear clamping faces of the insert part of the clamping member is substantially concave, and/or wherein one of the front or rear clamping faces of the insert part of the clamping member is substantially flat. Furthermore, the front clamping face and the rear clamping face may have shapes that are formed by combinations of the above, for example having a concave, i.e. inwardly rounded and semi-circular, central part that is adjoined on opposite sides by flattened edges.

In an embodiment, the clamping opening has an oblong shape with a substantially concave end section, and/or a substantially flattened end section. Either one or both of the end sections, i.e. the front end section and/or the rear end section, may be concave or flat, depending on the shape of the upper end of the steerer tube. However, it was explained before that the end sections may also comprise both concave parts and flat parts.

The clamping opening further comprises straight sections extending in between the end sections. The straight sections extend along the longitudinal direction and provide that the width of the clamping opening, seen in a horizontal direction perpendicular to the longitudinal direction, is substantially constant to ensure a rigid fit between the steerer tube and insert parts towards the sides.

In a further embodiment, the concave end section is adjoined by flattened edges on opposed sides, seen in a transverse direction perpendicular to the longitudinal direction. The combined presence of flattened edges may allow the clamping face of the insert part, e.g. the rear clamping face of the insert part, to be substantially flat to abut the flat side edges of the rear end section and to abut the flat front contour of the steerer tube. The rear clamping face may thus be flat over its entire width and the concave part of the rear end section may remain empty as no part of the insert part will lie therein. However, the concave part of the rear end section will be filled when the convex rear contour of the steerer tube is received therein in a front-most position of the stem portion relative to the steerer tube.

In an embodiment, at least one of the insert parts comprises cooperating wedge segments that are slidable along each other and a tightening element for pulling the wedge segments towards each other in the insertion direction while having them slide along each other and exert a clamping force between the steerer tube and the clamping opening.

The wedge segments are movable in the insertion direction with two or more slanted guiding faces along each other while at the same time getting forced by the interaction of those slanted guiding faces to move inward in the longitudinal direction towards the steerer tube. A tightening element then is provided for pulling the two or more wedge segments in the insertion direction along each other towards a clamping position in which the required clamping force is exerted onto the steerer tube. This wedge type of clamping may be able to reliably clamp the steerer tube, can be kept compact, and may be suitable for being placed in between the steerer tube and the end sections, e.g. the front end section and the rear end section, in a single rotational position.

In an alternative embodiment, the insert parts may be single-piece insert parts, e.g. being free of movable elements. According to this embodiment, a set screw may be provided in the clamping opening, for example at the rear end section, to clamp all insert parts and the steerer tube against the front end section. Alternatively, clamping screws may be provided at the clamping opening to confine the perimeter of the clamping opening, in order to clamp the steerer tube and the insert parts inside it.

In an embodiment, the assembly further comprises the steerer tube and/or a handlebar. The steerer tube and the handlebar may comprise one or more of the features disclosed in the above in relation to other embodiments of the assembly.

In particular, the handlebar may be integrally connected to the stem portion as an integrated handlebar cockpit, for example formed by the same carbon fibre part.

According to a second aspect, the invention provides a bicycle comprising a steerer tube and an assembly for a bicycle handlebar as recited herein, wherein the stem portion is clamped to the steerer tube with the aid of one or more of the clamping members of the assembly. The bicycle according to the second aspect may comprise one or more of the features and/or benefits disclosed herein in relation to the assembly according to the present invention, in particular as recited in the claims.

### Brief description of drawings

Further characteristics of the invention will be explained below, with reference to embodiments, which are displayed in the appended drawings, in which:
Figure 1 schematically depicts a first embodiment of the assembly according to the present invention, comprising clamping members of the first type,
Figures 2a - 2d show top views on the assembly of figure 1 in various configurations of the clamping members,
Figure 3 schematically depicts a second embodiment of the assembly according to the present invention, comprising clamping members of the second type,
Figures 4a - 4d show top views on the assembly of figure 3 in various configurations of the clamping members.

Throughout the figures, the same reference numerals are used to refer to corresponding components or to components that have a corresponding function.

### Detailed description of embodiments

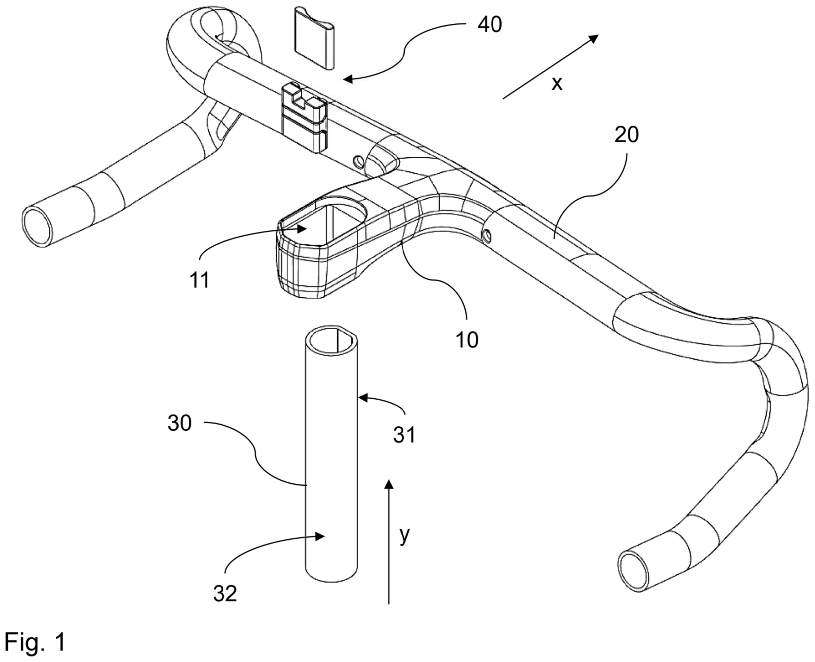

Figure 1 schematically depicts an embodiment of the assembly according to the invention, comprising a stem portion 10 that extends in a longitudinal direction (x). The stem portion 10 comprises a clamping opening 11 at a rear end and is integrally connected to a handlebar 20 at an opposed front end of the stem portion 10. The stem portion 10 and the handlebar 20 form an integral handlebar cockpit.

The clamping opening 11 has an elongated shape, having a flattened front end section 12 and a convex rear end section 13 that is curved in a centre and that comprises flattened side edges 14 on opposed sides.

The clamping opening 11 is configured to receive an upper end of a steerer tube 30 along an insertion direction (y). The steerer tube 30 comprises a flattened front contour 31 and a convex rear contour 32, of which the shapes thus essentially differ, so as to obtain an asymmetric clamping opening 11.

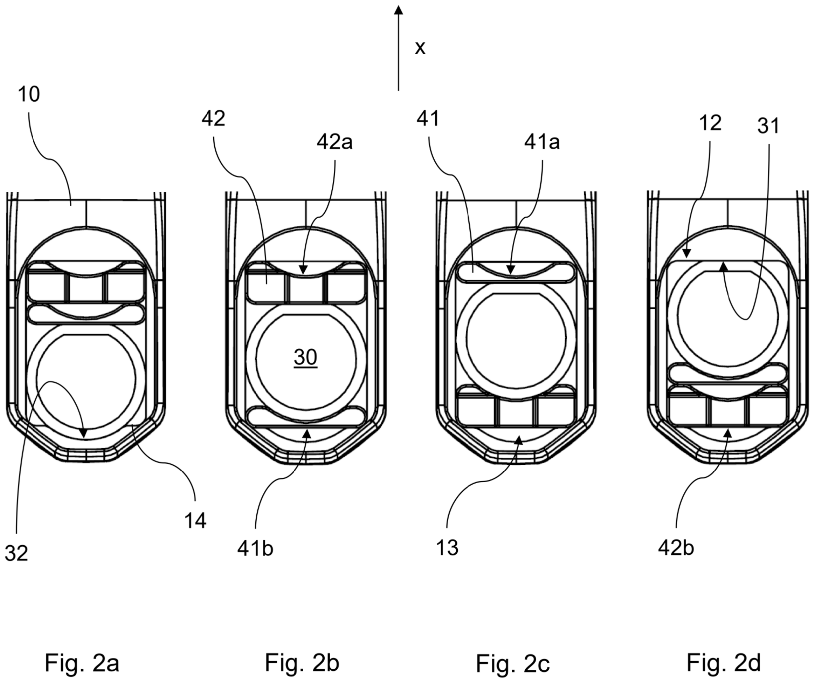

The assembly in figures 1 and 2 comprises clamping members of the first type, to which are referred with reference numeral 40. In figure 1, the components are shown in an exploded-view representation and in figures 2a - 2d, the components are shown assembled in various configurations.

The clamping members 40 comprise two insert parts 41, 42. A first insert part 41 is relatively thin in the longitudinal direction, having a thickness of 5 mm. A second insert part 42 is relatively thick in the longitudinal direction, having a thickness of 10 mm. This second insert part 42 comprises cooperating wedge segments 43 that are slidable along each other and a tightening element for pulling the wedge segments 43 towards each other in the insertion direction (y) while having them slide along each other and, in the clamping position shown in figures 2a - 2d, exert a clamping force between the steerer tube 30 and the clamping opening 11.

The insert parts 41, 42 have front clamping faces 41a, 42a that are shaped different from the rear clamping faces 41b, 42b. The front clamping faces 41a, 42a are substantially flattened having rounded corners, e.g. at least at their sides, to abut the flat front end section 12 of the clamping opening 11, as is shown in figures 2a - 2c. In figure 2d, the flattened front contour 31 of the steerer tube 30 is shown to lie against the flattened front end section 12.The front clamping faces 41a, 42a further comprise a concave central portion in which the convex rear contour 32 of the steerer tube 30 can be received, as is shown in figures 2b - 2d.

The rear clamping faces 41b, 42b are substantially flattened over their entire width, to abut the flat side edges 14 of the rear end section 13 of the clamping opening 11, as is shown in figures 2b - 2d. **In** figure 2a, the convex rear contour 32 of the steerer tube 30 is shown to lie within the concave centre of the rear end section 13. The flat rear clamping faces 41b, 42b further allow the insert parts 41, 42 to lie against the flattened front contour 31 of the steerer tube 30, as is shown in figures 2a - 2c.

In the embodiment in figures 1 and 2, the clamping opening 11 has a remaining width along the longitudinal direction (x) of 15 mm after inserting the steerer tube 30 therein. The two insert parts 41, 42 of the first type will fill this 15 mm, since the first insert part 41 has a thickness of 5 mm and since the second insert part 42 has a thickness of 10 mm.

In figure 2a, the assembly is shown in a front-most position of the stem portion 10 relative to the steerer tube 30, by having both insert parts 41, 42 placed in the front end section 12 in front of the steerer tube 30.

In figure 2b, the stem portion 10 is moved backwards over 5 mm by removing the 5 mm insert part 41 out of the front end section 12 and placing it in the rear end section 13.

In figure 2c, the stem portion 10 is moved backwards for a further 5 mm, so 10 mm in total, by placing the 5 mm insert part 41 back into the front end section 12 and by placing the 10 mm insert part 42 in the rear end section 13.

Finally, as shown in figure 2d, a rear-most position of the stem portion 10 can be achieved if both insert parts 41, 42 are inserted in the rear end section 13 to have a combined thickness of 15 mm.

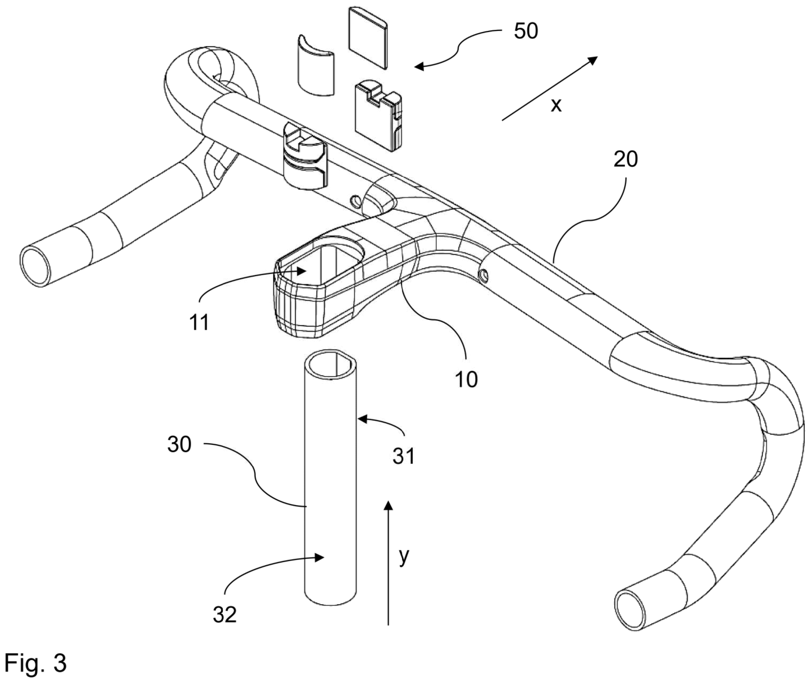

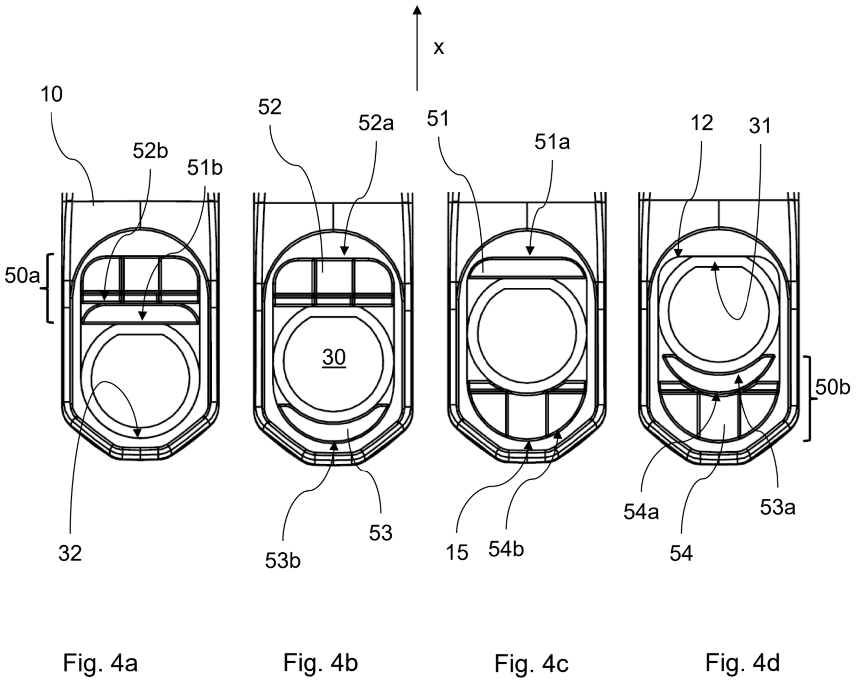

The embodiment in figures 3 and 4 comprises clamping members 50 of a second type, in particular comprising a front clamping member 50a with a first insert part 51 of 5 mm thickness and a front clamping member 50a with a second insert part 52 with wedge elements of 10 mm thickness and comprising a rear clamping member 50b with a first insert part 53 of 5 mm thickness and a rear clamping member 50b with a second insert part 54 with wedge elements of 10 mm thickness.

The insert parts 51, 52 of the front clamping members 50a are provided with flattened front clamping faces 51a, 52a having rounded corners, in order to correspond to the flattened front end section 12 of the clamping opening, as shown in figures 4a - 4c. The front contour 31 of the steerer tube 30 is flattened similarly, in order to lie against the front end section 12 as well, as is shown in figure 4d. The insert parts 51, 52 of the front clamping members 50a are further provided with flattened rear clamping faces 51b, 52b, in order to correspond to the flattened front contour 31 of the steerer tube 30, as shown in figures 4a - 4c.

The insert parts 53, 54 of the rear clamping members 50b are provided with concave front clamping faces 53a, 54a, in order to correspond to the convex rear contour 32 of the steerer tube 30, as shown in figures 4b - 4d. The rear end section 15 of the clamping opening 11 is concave, so that the rear contour 32 can be received therein, as is shown in figure 4a. The insert parts 53, 54 of the rear clamping members 50b are further provided with convex rear clamping faces 53b, 54b, in order to correspond to the concave rear end section 15, as shown in figures 4b - 4d.

In the embodiment in figures 3 and 4, the clamping opening 11 has a remaining width along the longitudinal direction (x) of 15 mm after inserting the steerer tube 30 therein. Combinations of the two insert parts 51, 52, 53, 54 will fill this 15 mm, since the first insert parts 51, 53 have a thickness of 5 mm and since the second insert parts 52, 54 have a thickness of 10 mm.

In figure 4a, the assembly is shown in a front-most position of the stem portion 10 relative to the steerer tube 30, by having the insert parts 51, 52 of the front clamping member 50a placed in the front end section 12 in front of the steerer tube 30.

In figure 4b, the stem portion 10 is moved backwards over 5 mm by removing the 5 mm first insert part 51 out of the front end section 12 and placing the 5 mm second insert part 53 in the rear end section 15.

In figure 4c, the stem portion 10 is moved backwards for a further 5 mm, so 10 mm in total, by placing the 5 mm first insert part 51 back into the front end section 12, by removing the 10 mm first insert part 52 from the front end section 12, by removing the 5 mm second insert part 53 from the rear end section 15 and by placing the 10 mm second insert part 54 in the rear end section 15.

Finally, as shown in figure 4d, a rear-most position of the stem portion 10 can be achieved if both second insert parts 53, 54 are inserted in the rear end section 15 to have a combined thickness of 15 mm.

## Claims

1. Assembly for a bicycle handlebar, comprising:
- a stem portion (10) for extending in a longitudinal direction (x) between a steerer tube and a handlebar (20);
- a clamping opening (11) in an end part of the stem portion, which clamping opening is designed for receiving an upper end of the steerer tube (30) placed therein in an insertion direction (y); and
- at least one clamping member (40, 50) for clamping the steerer tube inside the clamping opening,
wherein the clamping member comprises at least one insert part (41, 42, 51, 52, 53, 54) that is destined to lie with a front clamping face (41a, 42a, 51a, 52a, 53a, 54a) against the steerer tube and with a rear clamping face (41b, 42b, 51b, 52b, 53b, 54b) against the clamping opening, or vice versa,
wherein the clamping opening comprises a front end section (12) and a rear end section (13, 15), located opposite to each other along the longitudinal direction, and
wherein the clamping opening is dimensioned to allow the upper end of the steerer tube and the insert part of the clamping member to fit inside it behind each other in the longitudinal direction (x),
**characterized in that,**
the upper end of the steerer tube comprises a front contour (31) and a rear contour (32), located opposite to each other along the longitudinal direction (x), wherein the front contour is of a different shape than the rear contour,
wherein the difference in shape is such that the insert part of the clamping member is positionable in a single rotational position against the front and rear contours of the steerer tube inside the clamping opening for adjusting a distance between the steerer tube and the handlebar.

2. Assembly according to claim 1, wherein the front end section is of a different shape than the rear end section.

3. Assembly according to claim 1, wherein the front end section is shaped to at least partly correspond to the rear end section.

4. Assembly according to any of the preceding claims, wherein the clamping member is of a first type (40), in which the front clamping face is of a different shape than the rear clamping face.

5. Assembly according to any of the claims 1 - 3, wherein the clamping member is of a second type (50), in which the front clamping face is shaped to at least partly correspond to the rear clamping face.

6. Assembly according to any of the preceding claims, wherein the upper end of the steerer tube has a cylindrical cross section with a flattened portion, and
wherein one of the front or rear clamping faces of the insert part of the clamping member is substantially concave, and/or
wherein one of the front or rear clamping faces of the insert part of the clamping member is substantially flat.

7. Assembly according to any of the preceding claims, wherein the clamping opening has an oblong shape with:
- a substantially concave end section (15), and/or
- a substantially flattened end section (12, 13), and
with straight sections extending therebetween.

8. Assembly according to claim 8, wherein the concave end section is adjoined by flattened edges (14) on opposed sides, seen in a transverse direction perpendicular to the longitudinal direction.

9. Assembly according to any of the preceding claims, wherein at least one of the insert parts comprises cooperating wedge segments that are slidable along each other and a tightening element for pulling the wedge segments towards each other in the insertion direction (y) while having them slide along each other and exert a clamping force between the steerer tube and the clamping opening.

10. Bicycle comprising a steerer tube and an assembly for a bicycle handlebar according to any one of the preceding claims, wherein the stem portion is clamped to the steerer tube with the aid of one or more of the clamping members of the assembly.
